# EUROPÄISCHE PATENTANMELDUNG

(11) **EP 2 899 373 A1**
(43) Veröffentlichungstag der Anmeldung: **29.07.2015**
(21) Anmeldenummer: 14152044.5
(22) Anmeldetag: 22.01.2014
(51) Int. Cl.: F01D 21/20, F02C 9/18, F02C 9/52

(54) **Betriebsverfahren einer stationären Gasturbine bei Lastabwurf**

(71) Anmelder: Siemens Aktiengesellschaft, 80333 München (DE)
(72) Erfinder: Link, Marco, 46049 Oberhausen (DE); Savilius, Nicolas, 45359 Essen (DE)

(57) **Zusammenfassung**

Die Erfindung betrifft ein Verfahren zum Betreiben einer stationären Gasturbine (1) bei Lastabwurf mit wenigstens einem Verdichter (11), wenigstens einer Entspannungsturbine (14) und einer mit wenigstens einem Brenner (13) versehenen Brennkammer (12), bei welcher Gasturbine (1) Verdichterluft (20) über wenigstens eine Entnahmeleitung (15) aus oder hinter dem Verdichter (11) entnommen werden kann, welches folgende Schritte aufweist:
- Erfassen eines einen Lastabwurf anzeigenden Signals;
- nach dem Erfassen des Signals Verminderung der zugeführten Brennstoffmenge pro Zeiteinheit zu den Brenner (13);
- ebenfalls nach dem Erfassen des Signals Erhöhung der entnommenen Menge an Verdichterluft (20) pro Zeiteinheit über die wenigstens eine Entnahmeleitung (15).

## Beschreibung

Die vorliegende Erfindung betrifft ein Verfahren zum Betreiben einer stationären Gasturbine bei Lastabwurf sowie eine derartige Gasturbine, die dazu ausgebildet ist, ein solches Verfahren anzuwenden.

Bei einem Lastabwurf setzt eine plötzliche Verringerung der Gasturbinenleistung um einen verhältnismäßig großen Betrag ein. Typische Ursachen für einen Lastabwurf sind etwa das Öffnen des Generator- oder Blockleistungsschalters, bspw. aufgrund von Störungen im elektrischen Netz außerhalb des Kraftwerks. Ziel eines jeden Lastabwurfs ist es jedoch, die Gasturbine soweit in ihrem Betrieb abzufangen, dass diese in Eigenbedarfsbetriebsweise bzw. in einem Leerlauf betrieben werden kann.

Im Rahmen der vorliegenden Erfindung soll ein Lastabwurf eine Leistungsverminderung von wenigstens 50 % der Gasturbine innerhalb von nicht mehr als 10 Sekunden bedeuten. Insbesondere erfolgt diese Leitungsverminderung von Nennlast aus.

Mitunter werden an Gasturbinen noch weitaus höhere Anforderungen gestellt, nämlich etwa, dass sie in der Lage sind, innerhalb von etwa einer Sekunde auf die noch vom Netz aufnehmbare Restleistung heruntergefahren werden zu können. Anderenfalls würde die überschüssige Leistung den Turbosatz der Gasturbine derart beschleunigen, dass die zulässigen Drehzahlen überschritten würden und hierdurch der Überdrehzahlschutz aktiviert würde. Weitere Schutzschaltungen der Gasturbine beugen bspw. einem Abschalten, einem sogenannten "Trip", vor, um die Gasturbine vor weiteren mechanischen Schäden aufgrund von zu hohen Drehzahlen zu schützen.

Derzeitige Betriebsverfahren bei Lastabwurf einer Gasturbine beschränken sich auf die schnelle Verminderung der Zufuhr der Brennstoffmenge pro Zeiteinheit zu den Brennern der Gasturbine, um so einerseits eine Entlastung der Gasturbine zu erreichen, und andererseits eine Stützung der Netzfrequenz weiter aufrecht erhalten zu können.

Problematisch bei derartigen Betriebsweisen ist jedoch, dass die Verminderung der Gasturbinenleistung mitunter zu langsam erfolgt, um ein Überschreiten der maximalen Drehzahl der Gasturbine zu vermeiden. In anderen Worten kommt es trotz typischer Verminderung der Brennstoffmenge pro Zeiteinheit weiterhin zur Selbstabschaltung von Gasturbinen, etwa aufgrund von "Trips". Dadurch ist es jedoch nicht möglich, die Gasturbine bei erneuter Leistungsnachfrage schnell wieder zu belasten, da diese erst wieder hochgefahren werden muss. Zudem kann während des Lastabwurfs nicht das Netz der durch die Gasturbine erzeugten Leistung stabilisiert werden.

Insofern stellt es sich als technische Ausgabe dar, ein Betriebsverfahren vorzuschlagen, welches eine schnelle Verminderung der Gasturbinenleistung bei Lastabwurf erlaubt unter gleichzeitiger Verminderung des Risikos für das Auftreten von Drehzahlen, die über der maximal erlaubbaren Drehzahl liegen. Es soll somit ein Betriebsverfahren vorgeschlagen werden, welches einen kontrollierten Lastabwurf erlaubt unter Beibehaltung einer sicheren und kontrollierbaren Betriebsweise.

Diese der Erfindung zugrundeliegende Aufgabe wird gelöst durch ein Verfahren gemäß Anspruch 1 sowie eine Gasturbine gemäß Anspruch 6.

Insbesondere wird die der Erfindung zugrundeliegende Aufgabe gelöst durch ein Verfahren zum Betreiben einer stationären Gasturbine bei Lastabwurf mit wenigstens einem Verdichter, wenigstens einer Entspannungsturbine und einer mit wenigstens einem Brenner versehenen Brennkammer, bei welcher Gasturbine Verdichterluft über wenigstens eine Entnahmeleitung aus oder hinter dem Verdichter entnommen werden kann, welches folgende Schritte aufweist:
- Erfassen eines einen Lastabwurf anzeigenden Signals;
- nach dem Erfassen des Signals Verminderung der zugeführten Brennstoffmenge pro Zeiteinheit zu den Brenner (13);
- ebenfalls nach dem Erfassen des Signals Erhöhung der entnommenen Menge an Verdichterluft (20) pro Zeiteinheit über die wenigstens eine Entnahmeleitung (15) aus dem Verdichter.

Weiterhin wird die der Erfindung zugrundeliegende Aufgabe gelöst durch eine stationäre Gasturbine mit wenigstens einem Verdichter, wenigstens einer Entspannungsturbine und einer mit wenigstens einem Brenner versehenen Brennkammer, bei welcher der Gasturbine Verdichterluft über wenigstens eine Entnahmeleitung aus dem Verdichter bzw. hinter dem Verdichter entnommen werden kann, wobei weiterhin eine Gasturbinenregelungseinheit umfasst ist, die dazu ausgebildet ist, die Gasturbine gemäß eines der vorab beschriebenen wie auch nachfolgend beschriebenen Verfahren zu betreiben.

An dieser Stelle sei darauf hingewiesen, dass das zu erfassende Signal sowohl ein in der Gasturbinenregelungseinheit selbst generiertes Signal sein kann, oder auch ein Signal von außerhalb der Gasturbine sein kann. Typischerweise ist dieses Signal von elektrischer Natur und wird über die Gasturbinenregelungseinheit oder eine andere Steuer- bzw. Einstelleinheit erfasst und in geeignete Einstellbefehle für die Gasturbine umgesetzt. Insbesondere leitet ein solche Signal typischerweise einen Lastabwurf kausal ein.

Das zu erfassende Signal zeigt erfindungsgemäß einen Lastabwurf an und kann damit in geeigneter Weise zur Regelung der Gasturbine herangezogen werden. Die Anzeige ist hierbei keine optische Anzeige, sondern eine signaltechnische.

Ebenfalls ist es gemäß einer Ausführungsform der Erfindung möglich, dass bei Verminderung der Brennstoffzufuhr gleichzeitig auch eine Begrenzung des Ansaugmassenstroms, etwa durch eine Leitschaufelverstelleinrichtung vorgenommen wird. Diese Maßnahme kann dazu dienen, die Turbineneintrittstemperatur geeignet zu konditionieren, um einen Überdrehzahlbetrieb unterstützend vorzubeugen. Da eine solche Verstellung jedoch typischerweise nur relativ langsam erfolgt im Vergleich zu der Dauer eines Lastabwurfs, kann eine solche Maßnahme nur geringfügig unterstützend sein.

Weiter sei darauf hingewiesen, dass die Gasturbinenregelungseinheit auch im Sinne einer Gasturbinensteuerungseinheit ausgebildet sein kann. Wesentlich ist, dass die Gasturbinenregelungseinheit dazu ausgebildet ist, das Betriebsverfahren gemäß der vorab wie auch nachfolgend beschriebenen Ausführungsform zur verbesserten Einleitung eines Lastabwurfs zu betreiben. Hierbei nimmt die Gasturbinenregelungseinheit geeignete stelltechnische Maßnahmen vor, um sowohl die Verminderung der zugeführten Brennstoffmenge pro Zeiteinheit zu den Brennern, wie auch die Erhöhung der entnommenen Menge an Verdichterluft pro Zeiteinheit über die wenigstens eine Entnahmeleitung zu veranlassen bzw. einzustellen. Diese Maßnahmen erfolgen allesamt während des Lastabwurfs.

Zudem soll die Entnahme von Verdichterluft über die Entnahmeleitung hinter dem Verdichter erfindungsgemäß nur soweit erfolgen, soweit die Verdichterluft noch nicht mit Brennstoff vermischt ist. Eine Entnahme von Verdichterluft hinter dem Verdichter kann also bspw. nicht in der Brennkammer bzw. der Turbine selbst, erfolgen.

Durch die Erhöhung der entnommenen Menge an Verdichterluft pro Zeiteinheit kommt es bei Lastabwurf zu einer Verschlechterung des Gasturbinenwirkungsgrades, da die entnommene Menge erfindungsgemäß nicht an der Verbrennung teilnimmt. Damit wird ebenfalls nicht die gesamte Menge an in den Verdichter eingeströmter Ansaugluft in der Entspannungsturbine entspannt, wodurch eine Reduzierung der Gasturbinenleistung die Folge ist. Da zudem der Lastabwurf mitunter sehr schnell erfolgt, über einen Zeitraum von nur wenigen Sekunden, kann so ein Betrieb der Gasturbine bei zu hohen Drehzahlen, die aus einer zu großen Gasturbinenleistung resultieren, effizient verhindert werden. Das Risiko für eine Abschaltung der Gasturbine aufgrund eines "Trips", bzw. aufgrund von zu hohen Drehzahlen, kann damit ebenfalls vermindert werden. Somit ist ein schnelles Entlasten der Gasturbine bei Lastabwurf unter gleichzeitig erhöhtem Schutz der Gasturbine vor "Trips" möglich.

Gemäß einer ersten Ausführungsform des erfindungsgemäßen Verfahrens ist vorgesehen, dass die Erhöhung der Entnahme von Verdichterluft eine Aktivierung der Entnahme ist. Eine Aktivierung ist hierbei eine aus einem Nullzustand einsetzende Entnahme. D.h. bei einer Aktivierung wurde vorab noch keine Verdichterluft entnommen, und die Erhöhung der entnommenen Menge an Verdichterluft setzt praktisch sprunghaft ein. Ein solches Verfahren ist insbesondere bei Gasturbinen geeignet, die bei Nenndrehzahl betrieben werden, wobei typischerweise keine Verdichterluft entnommen wird. Aufgrund des sprunghaften Anstiegs der Entnahme von Verdichterluft kann somit ein besonders effizienter Lastabwurf, bzw. eine besonders effiziente Unterstützung des Lastabwurfs erreicht werden, da ein großes Entnahmepotential an Verdichterluft für das ausführungsgemäße Verfahren zur Verfügung steht.

Gemäß einer weiteren, besonders bevorzugten Ausführungsführungsform des erfindungsgemäßen Verfahrens ist vorgesehen, dass die über die wenigstens eine Entnahmeleitung entnommene Verdichterluft an die wenigstens eine Entspannungsturbine zur vermehrten Kühlung zugeführt wird. Da die Kühlluftversorgung der Entspannungsturbine typischerweise nicht bzw. nur zu einem geringen Teil an der Entspannungsarbeit teilnimmt, kann so eine besonders günstige Reduzierung der Gasturbinenleistung bei Lastabwurf erreicht werden. Die Versorgung der Entspannungsturbine mit Kühlluft dient hierbei im Normalfall der Kühlung der mit Heißgas beaufschlagten Turbinenschaufeln sowie anderer mit Heißgas beaufschlagter Bauteile in der Entspannungsturbine.

Gemäß eines weiteren, besonders bevorzugten Verfahrens ist vorgesehen, dass die über die wenigstens eine Entnahmeleitung entnommene Verdichterluft der Ansaugluft an oder vor dem Verdichtereingang zur Ausführung einer Anti-Icing-Betriebsweise zugeführt wird. Unter Anti-Icing versteht man hierbei die Versorgung der Ansaugluft mit verhältnismäßig wärmerer Prozessluft zur Verminderung der Dichte der damit gemischten Ansaugluft, und sie dient damit zur Verminderung eines angesaugten Massenstroms. Das Anti-Icing soll insbesondere bei ungünstigen Betriebsbedingungen wie geringen Umgebungstemperaturen bzw. hoher Luftfeuchtigkeit die Bildung von Eiskristallen am Verdichtereintritt verhindern. Hierzu werden typischerweise geeignete Leitungen vorgesehen, die verhältnismäßig wärmere Prozessluft mit der Ansaugluft effizient zu mischen erlauben, um so eine Eiskristallbildung am Verdichter zu verhindern.

Gemäß einer besonders bevorzugten Ausführungsform des erfindungsgemäßen Verfahrens werden beide vorab beschriebenen Ausführungsformen simultan ausgeführt, d.h. die aus oder hinter dem Verdichter entnommene Luft wird gleichzeitig der Entspannungsturbine zu einer vermehrten Kühlung wie auch der Ansaugluft zum Ausführen einer Anti-Icing-Betriebsweise zugeführt. Dadurch können verhältnismäßig größere Mengen an Verdichterluft entnommen werden, und somit der Lastabwurf der Gasturbine verbessert unterstützt werden.

An dieser Stelle sei auch darauf hingewiesen, dass die Entnahmeleitung bzw. die damit in fluidtechnischer Verbindung stehenden Leitung zur Weiterführung der Verdichterluft an Entspannungsturbine sowie an die Ansaugluft geeignete Ventile aufweisen, die kurzzeitig, d.h. über Zeiträume von maximal einer Sekunde geschlossen bzw. geöffnet werden können. Diese sind mitunter in typischen Sekundärluftverdichterentnahmen nicht vorhanden.

Gemäß einer weiteren Ausführungsform des erfindungsgemäßen Verfahrens ist vorgesehen, dass die Verminderung der Brennstoffzufuhr und die Erhöhung der Entnahme von Verdichterluft gleichzeitig erfolgt. Gleichzeitig ist hier im Rahmen der typischen Verarbeitungszeiten der Gasturbinenregelungseinheit zu verstehen. Insbesondere sollen beide Verfahrensschritte gleichzeitig eingeleitet und für einen Zeitraum parallel aufrechterhalten werden. Es kann jedoch sein, dass nach diesem Zeitraum der parallelen Aufrechterhaltung ein Verfahrensschritt länger andauert im Vergleich zum anderen. Aufgrund der gleichzeitigen Einleitung beider Verfahrensschritte kann eine möglichst schnelle Unterstützung des Lastabwurfs erreicht werden, um etwa einen "Trip" zu vermeiden.

Nachfolgend soll die Erfindung anhand von einzelnen Figuren näher im Detail dargestellt werden. Ferner ist darauf hinzuweisen, dass die Figuren lediglich schematisch zu verstehen sind und eine Einschränkung hinsichtlich der Ausführbarkeit der Erfindung daraus nicht resultiert.

Weiter ist anzumerken, dass die in den Figuren mit gleichen Bezugszeichen versehenen Bauteile bzw. Verfahrensschritte gleiche technische Wirkungen aufweisen.

Zudem werden die in den nachfolgenden Figuren aufgeführten technischen Merkmale in beliebiger Kombination miteinander beansprucht, soweit diese Kombination die der Erfindung zugrundeliegende Aufgabe lösen kann.

Hierbei zeigen:
- Figur 1: eine flussdiagrammatische Darstellung einer Ausführungsform des erfindungsgemäßen Verfahrens zum Betreiben einer stationären Gasturbine;
- Figur 2: eine schematische Darstellung einer stationären Gasturbine, die dazu ausgebildet ist, ein vorab wie auch nachfolgend beschriebenes Verfahren auszuführen.

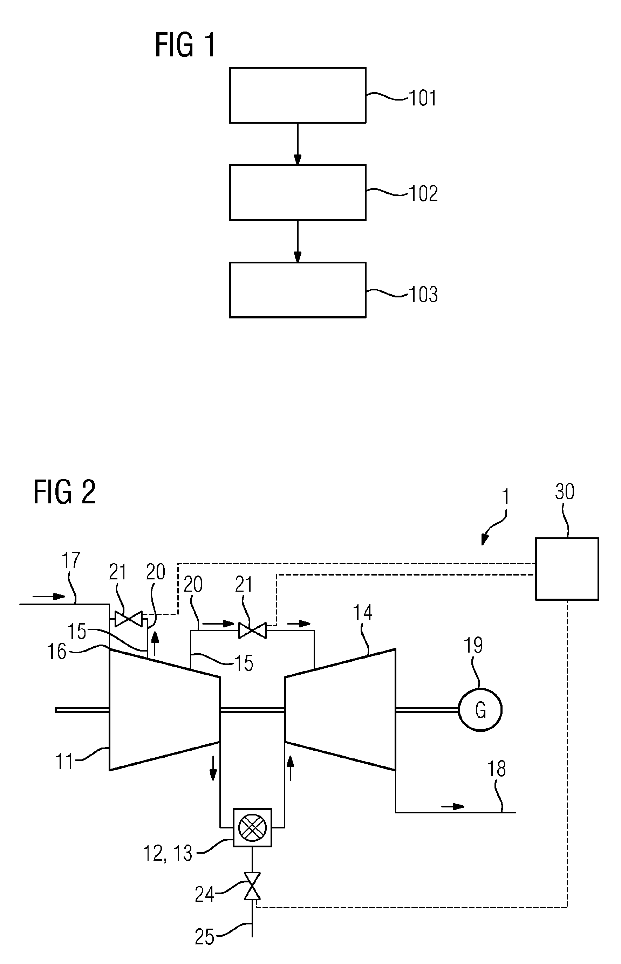

Figur 1 zeigt eine flussdiagrammatische Darstellung einer Ausführungsform des erfindungsgemäßen Verfahrens zum Betrieb einer stationären Gasturbine 1 bei Lastabwurf, wobei die Gasturbine 1 bspw. wie in Figur 2 gezeigt ausgebildet ist. Die Gasturbine 1 besitzt einen Verdichter 11, wenigstens eine Entspannungsturbine 14 und einen mit wenigstens einem Brenner 13 versehene Brennkammer 12, sowie eine Entnahmeleitung 15, mittels welcher Verdichterluft aus oder hinter dem Verdichter 11 entnommen werden kann, um sie zur Unterstützung des Lastabwurfs an geeignete Nutzstellen zu führen. Hierbei weist das ausführungsgemäße Verfahren die folgenden drei Schritte auf:
- Erfassen eines einen Lastabwurf anzeigenden Signals (Verfahrensschritt 101);
- nach dem Erfassen des Signals Verminderung der zugeführten Brennstoffmenge pro Zeiteinheit zu dem Brenner 13 (zweiter Verfahrensschritt 102);
- ebenfalls nach dem Erfassen des Signals Erhöhung der entnommenen Menge an Verdichterluft 20 pro Zeiteinheit über die wenigstens eine Entnahmeleitung 15 (dritter Verfahrensschritt 103).

Figur 2 zeigt eine Ausführungsform der erfindungsgemäßen stationären Gasturbine 1 mit Verdichter 11, Entspannungsturbine 14, sowie wenigstens einem Brenner 13, der mit einer Brennkammer 12 brenntechnisch zusammenwirkt. Weiter weist die Gasturbine 1 zwei Entnahmeleitungen 15 auf, die aus dem Verdichter 11 Verdichterluft 20 entnehmen können und die sowohl zur Entspannungsturbine 14 wie auch zum Ansaugluftstrom zur Mischung mit der Ansaugluft 17 führen. Die beiden Entnahmeleitungen 15 haben hierbei geeignete, stellschnelle Ventile 21, die mit einer Gasturbinenregelungseinheit 30 in Wirkverbindung stehen.

Die Gasturbinenregelungseinheit 30 ist dazu ausgebildet, einen Lastabwurf anzeigendes Signal aufzunehmen bzw. zu verarbeiten, und infolge dessen einen verbesserten Lastabwurf, so wie von der Erfindung vorgeschlagen, auszuführen. Hierzu wird während des Lastabwurfs einerseits die zugeführte Brennstoffmenge pro Zeiteinheit zu dem Brenner 13 vermindert. Dazu kann ein in der Brennstoffzuleitung 25 vorgesehenes Brennstoffventil geeignet eingestellt werden. Im Rahmen dieser Einstellung wird der dem Brenner 13 zugeführte Brennstoff vermindert.

Ausführungsgemäß kann ebenso gleichzeitig nach dem Erfassen des Signals die Menge an Verdichterluft 20, die aus dem Verdichter 11 entnommen wird, erhöht werden. Hierzu können bspw. die beiden Ventile 21 aufgeregelt werden. Nach Entnahme der Verdichterluft wird diese einerseits an die Entspannungsturbine 14 insbesondere zu Kühlzwecken befördert, wie auch zu der Ansaugluft 17 des Ansaugluftstroms, um sich mit dieser im Sinne einer Anti-Icing-Betriebsweise zu vermischen. Die Zuführung bzw. Vermischung von Verdichterluft 20 und Ansaugluft 17 erfolgt ausführungsgemäß vor Eintritt in den Verdichter 11, bspw. in einem nicht weiter gezeigten Verdichteransauggehäuse.

Weitere Ausführungsformen ergeben sich aus den Unteransprüchen.

## Patentansprüche

1. Verfahren zum Betreiben einer stationären Gasturbine (1) bei Lastabwurf mit wenigstens einem Verdichter (11), wenigstens einer Entspannungsturbine (14) und einer mit wenigstens einem Brenner (13) versehenen Brennkammer (12), bei welcher Gasturbine (1) Verdichterluft (20) über wenigstens eine Entnahmeleitung (15) aus oder hinter dem Verdichter (11) entnommen werden kann, welches folgende Schritte aufweist:
- Erfassen eines einen Lastabwurf anzeigenden Signals;
- nach dem Erfassen des Signals Verminderung der zugeführten Brennstoffmenge pro Zeiteinheit zu den Brenner (13);
- ebenfalls nach dem Erfassen des Signals Erhöhung der entnommenen Menge an Verdichterluft (20) pro Zeiteinheit über die wenigstens eine Entnahmeleitung (15).

2. Verfahren nach Anspruch 1,
**dadurch gekennzeichnet, dass**
die Erhöhung der Entnahme von Verdichterluft (20) eine Aktivierung der Entnahme ist.

3. Verfahren nach einem der Ansprüche 1 oder 2,
**dadurch gekennzeichnet, dass**
die über die wenigstens eine Entnahmeleitung (15) entnommene Verdichterluft (20) an die wenigstens eine Entspannungsturbine (14) zur vermehrten Kühlung zugeführt wird.

4. Verfahren nach einem der vorhergehenden Ansprüche,
**dadurch gekennzeichnet, dass**
die über die wenigstens eine Entnahmeleitung (15) entnommene Verdichterluft (20) der Ansaugluft (17) an oder vor dem Verdichtereingang (16) zur Ausführung einer Anti-Icing-Betriebsweise zugeführt wird.

5. Verfahren nach einem der vorhergehenden Ansprüche,
**dadurch gekennzeichnet, dass**
die Verminderung der Brennstoffzufuhr und die Erhöhung der Entnahme von Verdichterluft (20) gleichzeitig erfolgt.

6. Stationäre Gasturbine (1) mit wenigstens einem Verdichter (11), wenigstens einer Entspannungsturbine (14) und einer mit wenigstens einem Brenner (13) versehenen Brennkammer (12), bei welcher der Gasturbine (1) Verdichterluft (20) über wenigstens eine Entnahmeleitung (15) aus oder hinter dem Verdichter (11) entnommen werden kann,
**dadurch gekennzeichnet, dass**
weiterhin eine Gasturbinenregelungseinheit (30) umfasst ist, die dazu ausgebildet ist, die Gasturbine (1) gemäß einem der vorhergehenden Verfahren zu betreiben.
